(19) Europäisches Patentamt
European Patent Office
Office européen des brevets

(11) **EP 1 998 870 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**02.09.2015 Patentblatt 2015/36**

(45) Hinweis auf die Patenterteilung:
**29.02.2012 Patentblatt 2012/09**

(21) Anmeldenummer: **07726988.4**

(22) Anmeldetag: **16.03.2007**

(51) Int Cl.:
**B01D 53/14** $^{(2006.01)}$

(86) Internationale Anmeldenummer:
**PCT/EP2007/052509**

(87) Internationale Veröffentlichungsnummer:
**WO 2007/104800 (20.09.2007 Gazette 2007/38)**

(54) **VERFAHREN ZUM INKONTAKTBRINGEN ZWEIER PHASEN, DEREN KONTAKT VON WÄRMEENTWICKLUNG BEGLEITET IST**

PROCESS FOR CONTACTING TWO PHASES WHOSE CONTACT IS ACCOMPANIED BY HEAT EVOLUTION

PROCEDE DE MISE EN CONTACT DE DEUX PHASES DONT LE CONTACT S'ACCOMPAGNE DE FORMATION DE CHALEUR

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **16.03.2006 EP 06005413**

(43) Veröffentlichungstag der Anmeldung:
**10.12.2008 Patentblatt 2008/50**

(73) Patentinhaber: **BASF SE**
**67056 Ludwigshafen (DE)**

(72) Erfinder:
• **GROBYS, Mauricio**
**67435 Neustadt (DE)**
• **ASPRION, Norbert**
**67063 Ludwigshafen (DE)**

(74) Vertreter: **Reitstötter Kinzebach**
**Patentanwälte**
**Sternwartstrasse 4**
**81679 München (DE)**

(56) Entgegenhaltungen:
EP-A- 0 221 571          EP-A2- 0 588 175
WO-A1-2004/080573   WO-A1-2005/097299
WO-A1-2006/022885   WO-A2-2005/069965
JP-A- H10 202 053       US-A- 5 603 908
US-A- 5 782 958          US-A1- 2002 059 865
US-A1- 2003 141 223   US-A1- 2006 032 377
US-B1- 6 207 121         US-B1- 6 645 446
US-B2- 6 645 272

• KOHL A.L. ET AL: 'Gas Purification', Bd. 2, 1997, GULF PUBLISHING COMPANY, HOUSTON

**EP 1 998 870 B2**

**Beschreibung**

Die vorliegende Erfindung betrifft ein Verfahren zum Inkontaktbringen zweier nicht vollständig miteinander mischbarer Phasen, deren Kontakt von einer Wärmeentwicklung aufgrund eines Stoffübergangs und/oder einer chemischen Reaktion begleitet ist, nämlich ein Verfahren zum Entfernen saurer Gase aus einem Fluidstrom.

In zahlreichen Prozessen der chemischen Industrie treten Fluidströme auf, die Sauergase, wie z.B. $CO_2$, $H_2S$, $SO_2$, $CS_2$, HCN, COS oder Mercaptane als Verunreinigungen enthalten. Bei diesen Fluidströmen kann es sich beispielsweise um Gasströme, wie Erdgas, Synthesegas aus Schweröl oder schweren Rückständen, Raffineriegas oder bei der partiellen Oxidation von organischen Materialien, wie beispielsweise Kohle oder Erdöl, entstehende Reaktionsgase, oder um flüssige oder verflüssigte Kohlenwasserstoffströme, wie LPG (liquified petroleum gas) oder NGL (natural gas liquids), handeln. Bevor diese Fluide transportiert oder weiterverarbeitet werden können, muss vielfach der Sauergasgehalt des Fluids reduziert werden. $CO_2$ muss beispielsweise aus Erdgas entfernt werden, da eine hohe Konzentration von $CO_2$ den Brennwert des Gases reduziert. Außerdem kann $CO_2$ in Verbindung mit dem in Fluidströmen häufig mitgeführten Wasser zu Korrosion an Leitungen und Armaturen führen.

Die Entfernung von Schwefelverbindungen aus diesen Fluidströmen ist aus unterschiedlichen Gründen wünschenswert. Beispielsweise muss der Gehalt an Schwefelverbindungen von Erdgas durch geeignete Aufbereitungsmaßnahmen unmittelbar an der Erdgasquelle reduziert werden, denn auch die Schwefelverbindungen bilden mit dem vom Erdgas häufig mitgeführten Wasser Säuren, die korrosiv wirken. Für den Transport des Erdgases in einer Pipeline müssen daher vorgegebene Grenzwerte der schwefelhaltigen Verunreinigungen eingehalten werden. Darüber hinaus sind zahlreiche Schwefelverbindungen bereits in niedrigen Konzentrationen übelriechend bzw. toxisch.

Die bei der Oxidation organischer Materialien, wie beispielsweise organische Abfälle, Kohle oder Erdöl, oder bei der Kompostierung organischer Substanzen enthaltender Abfallstoffe entstehenden Reaktionsgase müssen entfernt werden, um die Emission von Gasen, die die Natur schädigen oder das Klima beeinflussen können zu vermindern.

Zur Entfernung von Sauergasen werden vielfach Wäschen mit wässrigen Lösungen organischer oder anorganischer Basen eingesetzt. Beim Lösen von Sauergasen in dem Absorptionsmittel bilden sich mit den Basen Ionen. Das Absorptionsmittel kann durch Entspannen auf einen niedrigeren Druck oder Strippen regeneriert werden, wobei die ionischen Spezies zu Sauergasen zurück reagieren und/oder mittels Dampf abgestrippt werden. Nach dem Regenerationsprozess kann das Absorptionsmittel wiederverwendet werden.

Die Umsetzung zwischen den Sauergasen und dem Absorptionsmittel ist exotherm. Die entstehende Wärme wird zum Teil vom Fluidstrom aufgenommen. Unter bestimmten Umständen, kann der Fluidstrom mit einer Temperatur aus dem Absorber austreten, die über der Temperatur des regenerierten Absorptionsmittels liegt. Da bei vielen Verwendungen des behandelten Fluidstroms Beschränkungen hinsichtlich der maximal zulässigen Temperatur bestehen, muss der Fluidstrom zusätzlich gekühlt werden. Außerdem führt der behandelte Fluidstrom umso mehr Wasser bzw. Absorptionsmitteldämpfe mit sich, je höher die Temperatur ist, mit der er den Absorber verlässt. Vielfach muss man eine nachgeschaltete Entwässerungseinheit ausreichender Kapazität vorsehen. Darüber hinaus geht die Energie, die mit dem heißen behandelten Fluidstrom abgeführt wird, dem Gesamtverfahren verloren und muss im Regenerationsschritt wieder aufgebracht werden. Auf diese Weise erhöht sich der spezifische Energiebedarf des Verfahrens.

Die WO 2004/073838 offenbart ein Verfahren zur Entfernung von Kohlendioxid aus einem Gasstrom mit Hilfe eines Absorptionsmittels, bei dem das Absorptionsmittel während der Absorption gekühlt wird, indem Wärme auf ein aufnehmendes Medium übertragen wird. Als aufnehmendes Medium dient z. B. beladenes Absorptionsmittel aus dem Sumpf des Absorbers. Die Wärmeübertragung findet ausschließlich durch indirekten Wärmetausch mittels Wärmetauscher statt. Das beladene Absorptionsmittel aus dem Sumpf des Absorbers wird nicht in direkten Kontakt mit dem zu behandelnden Gas bzw. dem teilbeladenen Absorptionsmittel gebracht. Dieses Verfahren hat den Nachteil, dass die Installation zusätzlicher Wärmetauscher einen nicht unerheblichen Investitionsaufwand darstellt.

Die WO2004/080573 offenbart ein Verfahren zur Entfernung von Sauergasen aus Gasströmen, bei dem das wässerige Absorptionsmittel in mehreren Stufen regeneriert wird.

Die EP0588175 offenbart ein Verfahren zur Entfernung von Kohlendioxid aus Gasströmen, bei dem eine wässerige Aminlösung als Absorptionsmittel in verschiedenen Stufen regeneriert bzw. teilregeneriert wird.

Der Erfindung liegt die Aufgabe zugrunde, ein Verfahren zum Inkontaktbringen zweier Phasen bereitzustellen, deren Kontakt von einer Wärmeentwicklung aufgrund eines Stoffübergangs und/oder einer chemischen Reaktion begleitet ist, bei dem die Temperatur der aus dem Kontaktor austretenden behandelten ersten Phase begrenzt werden kann und das mit geringem apparativen Aufwand umgesetzt werden kann. Der Erfin-dung liegt insbesondere die Aufgabe zugrunde, ein Verfahren zum Entfernen saurer Gase aus einem Fluidstrom bereitzustellen, das neben den angegebenen Vorteilen einen geringen spezifischen Energieverbrauch aufweist.

Die Aufgabe wird gelöst durch ein Verfahren zum Entfernen saurer Gase aus einem Fluidstrom, bei dem man den Fluidstrom in den unteren Bereich eines Absorbers einführt und ein regeneriertes Absorptionsmittel, das eine wässrige Lösung wenigstens eines Amins umfasst und das mit dem Fluidstrom nicht vollständig mischbar ist, in den oberen Bereich des Absorbers einführt und dem Fluidstrom im Absorber entgegenführt, wobei man einen von Sauergasen befreiten Fluidstrom und ein mit Sauergasen beladenes Absorptionsmittel erhält, dadurch gekennzeichnet, dass man einen Teil des beladenen Absorptionsmittels an wenigstens einer zwischen dem oberen Bereich und dem unteren Bereich gelegenen Stelle in den Absorber zurückführt, ohne das zurückgeführte beladene Absorptionsmittel vor dem Einführen in den Absorber zu kühlen, und den anderen Teil des beladenen Absorptionsmittels durch Entspannen, Erwärmen und/oder Strippen regeneriert.

Der Fluidstrom enthält Sauergase, wie $CO_2$, $H_2S$, $SO_2$, $CS_2$, HCN, COS und/oder Mercaptane, insbesondere $CO_2$; das Absorptionsmittel enthält eine wässrige Lösung wenigstens einer organischen und/oder anorganischen Base.

Im erfindungsgemäßen Verfahren führt man einen Teil des beladenen Absorptionsmittels an wenigstens einer zwischen dem oberen Bereich und dem unteren Bereich gelegenen Stelle in den Absorber zurück. Das zurückgeführte beladene Absorptionsmittel kann an einer oder mehreren Stellen in den Absorber eingeführt werden. Das zurückgeführte beladene Absorptionsmittel kommt in direkten Kontakt mit dem zu behandelnden Fluidstrom und mischt sich mit dem im Absorber herablaufenden teilweise beladenen Absorptionsmittel.

Das Verhältnis des Massenflusses des zurückgeführten beladenen Absorptionsmittel zum Massenfluss des im oberen Bereich eingeführten regenerierten Absorptionsmittels beträgt im Allgemeinen 0,1 bis 3,0, vorzugsweise 0,25 bis 2,0 insbesondere 0,5 bis 1,5. Bei einer geringeren rückgeführten Menge stellen sich die Vorteile der Erfindung nicht in vollem Umfang ein. Die Rückführung größerer Mengen führt zu einer übergroßen hydraulischen Belastung des Absorbers und bringt keine weitergehenden Vorteile.

Die Zugabe des zurückgeführten beladenen Absorptionsmittels erfolgt beispielsweise auf einen Boden einer Bodenkolonne bzw. über einen Verteilerboden auf die darunterliegende Packung einer gepackten Kolonne. Vorzugsweise ist der Zugabeort für zumindest die Hauptmenge (mehr als 50 % der insgesamt zurückgeführten Menge) so gewählt, dass die Höhendifferenz zwischen dem Zugabeort des zurückgeführten beladenen Absorptionsmittels und dem Einführort des Fluidstroms 20 bis 80 %, inbesondere 30 bis 70 %, am meisten bevorzugt 40 bis 60 %, der Höhendifferenz zwischen dem Zugabeort des regenerierten Absorptionsmittels und dem Einführort des Fluidstroms beträgt. Wird beispielsweise das zurückgeführte beladene Absorptionsmittel an einer Stelle näher am Kopf des Absorbers eingeführt, beobachtet man unter Umständen einen "Durchbruch" von Sauergasen und einen Anstieg der Sauergaskonzentration im behandelten Fluidstrom, der den Absorber verlässt. Wird das zurückgeführte beladene Absorptionsmittel an einer Stelle näher am Sumpf des Absorbers eingeführt, stellen sich die Vorteile der Erfindung nicht in vollem Umfang ein.

Ausführungsformen, bei denen man die gesamte oder eine Teilmenge des zurückgeführten beladenen Absorptionsmittels vor dem Einführen in den Absorber kühlt, sind nicht Gegenstand der Erfindung.

Besondere Vorteile werden durch die erfindungsgemäße Rückführung von beladenem Absorptionsmittel in solchen Fällen erhalten, in denen die Wärmekapazität des Fluidstroms und die Wärmekapazität des regenerierten Absorptionsmittels vergleichbar sind. Die Wärmekapazität hängt vom jeweiligen Massenfluss und der jeweiligen spezifischen Wärmekapazität ab. In bevorzugten Ausführungsformen genügen daher der der Massenfluss des behandelten Fluidstroms m(1'), die spezifische Wärmekapazität des behandelten Fluidstroms Cp(1'), der Massenfluss des regenerierten Absorptionsmittels m(2) und die spezifische Wärmekapazität des regenerierten Absorptionsmittels Cp(2) der Gleichung:

$$0,5 \cdot m(2) \cdot Cp(2) \leq m(1') \cdot Cp(1') \leq \cdot 2,0\, m(2) \cdot Cp(2)$$

Besondere Vorteile werden durch die erfindungsgemäße Rückführung von beladenem Absorptionsmittel in solchen Fällen erhalten, bei denen eine vollständige Entfernung von Sauergasen nicht angestrebt wird und der von Sauergasen befreite Fluidstrom, der den Absorber verlässt, z. B. eine Kohlendioxid-Restkonzentration von 0,5 bis 5 mol-%, vorzugsweise 1,0 bis 2,5 mol-%, aufweist.

Das zurückgeführte beladene Absorptionsmittel weist vorzugsweise eine Temperatur von 0 bis 80 °C, insbesondere 20 bis 60 °C auf.

Das am Kopf des Absorbers eintretende regenerierte Absorptionsmittel weist vorzugsweise eine Temperatur von 20 bis 110 °C, insbesondere 30 bis 60 °C auf.

Die Sumpftemperatur im Absorber beträgt im Allgemeinen etwa 20 bis 120 °C, bevorzugt etwa 20 bis 80 °C, besonders bevorzugt 20 bis 60 °C.

Der Gesamtdruck (absolut)-im Absorber beträgt im Allgemeinen etwa 1 bis 150 bar, bevorzugt etwa 1 bis 100 bar, besonders bevorzugt 1 bis 85 bar.

Geeignete Absorberkolonnen sind beispielsweise Füllkörper-, Packungs- und Bodenkolonnen. In Bodenkolonnen sind Sieb-, Glocken- oder Ventilböden eingebaut, über welche die Flüssigkeit strömt. Durch spezielle Schlitze oder Löcher wird der Dampf geleitet, so dass eine Sprudelschicht entsteht. Auf jedem dieser Böden stellt sich ein neues Gleichgewicht ein. Füllkörperkolonnen können mit unterschiedlichen Formkörpern gefüllt werden. Wärme- und Stoffaustausch werden durch die Vergrößerung der Oberfläche aufgrund der meist etwa 25 bis 80 mm großen Formkörper verbessert. Bekannte Beispiele sind der Raschig-Ring (ein Hohlzylinder), Pall-Ring, Hiflow-Ring, Intalox-Sattel und dergleichen. Die Füllkörper können geordnet, aber auch regellos (als Schüttung) in die Kolonne eingebracht werden. Als Materialien kommen in Frage Glas, Keramik, Metall und Kunststoffe. Strukturierte Packungen sind eine Weiterentwicklung der geordneten Füllkörper. Sie weisen eine regelmäßig geformte Struktur auf. Dadurch ist es bei Packungen möglich, Druckverluste bei der Gasströmung zu reduzieren. Es gibt verschiedene Ausführungen von Packungen z. B. Gewebe- oder Blechpackungen. Als Material können Metall, Kunststoff, Glas und Keramik eingesetzt werden.

Der nicht zurückgeführte Teilstrom des beladenen Absorptionsmittels wird in üblicher Weise durch Entspannen, Erwärmen und/oder Strippen regeneriert.

Zur Regeneration wird das beladene Absorptionsmittel zweckmäßigerweise in eine Regenerationskolonne geleitet. Bei der Regenerationskolonne kann es sich ebenfalls um eine Füllkörper-, Packungs- oder Bodenkolonne handeln. Die Regenerationskolonne weist am Sumpf einen Aufheizer auf, z. B. einen Zwangsumlaufverdampfer mit Umwälzpumpe. Am Kopf weist die Regenerationskolonne einen Auslass für die freigesetzten Sauergase auf. Mitgeführte Absorptionsmitteldämpfe werden in einem Kondensator kondensiert und in die Kolonne zurückgeführt. In der Regenerationskolonne wird das beladene Absorptionsmittel durch Entspannung und Strippen teilweise regeneriert und/oder durch direkte oder indirekte Beheizung thermisch regeneriert.

Der Druck (absolut) am Kopf der Regenerationskolonne beträgt im Allgemeinen etwa 0.5 bis 5 bar, bevorzugt etwa 1 bis 3 bar.

Man kann das Verfahren auch als Verfahren mit zweistufiger Absorption und zweistufiger Regeneration des Absorptionsmittels durchführen (nicht erfindungsgemäss). Dabei geht man so vor, dass man

a) den Fluidstrom im Kontakt mit einem Absorptionsmittel, das eine wässrige Lösung wenigstens eines Amins umfasst, durch eine erste Absorptionszone in einem Absorber leitet, wobei man eine Hauptmenge der sauren Gase entfernt, und den Fluidstrom durch eine zweite Absorptionszone in dem Absorber leitet, wobei man eine weitere Menge der sauren Gase entfernt,

b) das beladene Absorptionsmittel in eine erste Regenerationszone leitet, wobei man ein teilregeneriertes Absorptionsmittel erhält, und einen Teil des teilregenerierten Absorptionsmittels in die erste Absorptionszone leitet,

c) den anderen Teil des teilregenerierten Absorptionsmittels in eine zweite Regenerationszone leitet, wobei man ein regeneriertes Absorptionsmittel erhält, und

d) das regenerierte Absorptionsmittel in die zweite Absorptionszone leitet.

In der Regel ist die zweite Absorptionszone oberhalb der ersten Absorptionszone in einem Absorber angeordnet. Der von der ersten Absorptionszone aufsteigende Fluidstrom tritt in die zweite Absorptionszone ein und der gereinigte Fluidstrom wird am Kopf des Absorbers abgezogen. Das aus der zweiten Absorptionszone herablaufende beladene Absorptionsmittel tritt in die erste Absorptionszone ein und wird gemeinsam mit dem beladenen Absorptionsmittel am Sumpf des Absorbers abgezogen. Die erfindungsgemäße Rückführung des beladenen Absorptionsmittels erfolgt im Fall der zweistufigen Absorption vorzugsweise in den mittleren Bereich der ersten oder zweiten Absorptionszone, z. B. auf einer Höhe von 20 bis 80 %, vorzugsweise 30 bis 70 % der Gesamthöhe der jeweiligen Absorptionszone.

Bei dem Fluidstrom, der nach dem erfindungsgemäßen Verfahren behandelt wird, handelt es sich beispielsweise um Synthesegas, insbesondere Synthesegas für die Ammoniakherstellung. Alternativ kann es sich um Erdgas, Raffineriegas oder Gasströme in chemischen oder metallurgischen Prozessen handeln. Der Fluidstrom ist vorzugsweise gasförmig.

Die verwendeten Absorptionsmittel sind wässrige Lösungen von Aminen.

Geeignete Amine sind z. B. Monoethanolamin (MEA), Methylaminopropylamin (MAPA), Piperazin, Diethanolamin (DEA), Triethanolamin (TEA), Diethylethanolamin (DEEA), Diisopropylamin (DIPA), Aminoethoxyethanol (AEE), Dimethylaminopropanoi (DIMAP) und Methyldiethanolamin (MDEA), Methyl-diisopropanolamin (MDIPA), 2-Amino-1-butanol (2-AB) oder Gemischen davon. Der Gesamtamingehalt beträgt z. B. 10 bis 70 Gew.-%, insbesondere 30 bis 60 Gew.-%.

Geeignete Metallsalze von Aminosäuren sind z. B. Kalium N,N-dimethylglycinat, Kalium-N-Methylalaninat oder Kalium 2-Aminoethansulfonat

Geeignete physikalische Lösungsmittel sind Sulfolan, N-Methylpyrrolidon (NMP), Propylenglycol oder Polyethylenglycolalkylether.

Bevorzugte Absorptionsmittel umfassen wenigstens ein Alkanolamin mit 2 bis 12 Kohlenstoffatomen. Besonders bevorzugte Absorptionsmittel umfassen wenigstens ein tertiäres Alkanolamin und vorzugsweise einen Aktivator in Form eines primären oder sekundären Amins. Bevorzugte Aktivatoren sind gesättigte, 5- bis 7-gliedrige heterocyclische Verbindungen mit mindestens einer NH-Gruppe und gegebenenfalls einem weiteren unter einem Sauerstoff- und einem Stickstoffatom ausgewählten Heteroatom im Ring. Geeignete Aktivatoren sind Piperazin, 1-Methylpiperazin, 2-Methylpiperazin, 1-Aminoethylpiperazin, Morpholin, Piperidin. Andere bevorzugte Aktivatoren sind ausgewählt unter Methylaminopropylamin, 2-Amino-1-butanol, 2-Amino-2-Methyl-1-propanol (AMP) und Aminoethoxyethanol..

Ganz besonders bewährt hat sich auch das in dem US-Patent US 4,336,233 beschriebene Absorptionsmittel. Es handelt sich dabei um eine wässrige Lösung von Methyldiethanolamin (MDEA) und Piperazin als Absorptionsbeschleuniger oder Aktivator (aMDEA®, BASF AG, Ludwigshafen). Die dort beschriebene Waschflüssigkeit enthält 1,5 bis 4,5 mol/l Methyldiethanolamin (MDEA) und 0,05 bis 0,8 mol/l, bevorzugt bis zu 0,4 mol/l Piperazin.

Ein weiteres geeignetes Absorptionsmittel umfasst eine wässrige Lösung von Methyldiethanolamin und Methylaminopropylamin.

Ein weiteres geeignetes Absorptionsmittel umfasst eine wässrige Lösung von Methyldiethanolamin und Aminoethoxyethanol.

Ein weiteres geeignetes Absorptionsmittel umfasst eine wässrige Lösung von Methyldiethanolamin und 2-Amino-1-butanol.

Ein weiteres geeignetes Absorptionsmittel umfasst eine wässrige Lösung von Kalium N,N-dimethylglycinat.

Ein weiteres geeignetes Absorptionsmittel umfasst eine wässrige Lösung von Kalium-N-Methylalaninat.

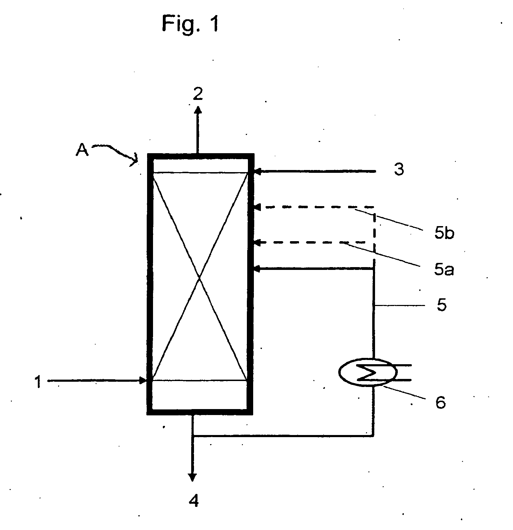

Die Erfindung wird anhand der beigefügten Figur 1 und die nachfolgenden Beispiele näher veranschaulicht.

Figur 1 zeigt schematisch den Aufbau eines Absorbers A zur Durchführung des erfindungsgemäßen Verfahrens. Der Absorber A umfasst Füllkörper oder Trennböden, um den Massen- und Wärmeaustausch zu bewirken. Über die Leitung 1 wird der zu behandelnde Fluidstrom in den Absorber A eingespeist und dem regenerierten Absorptionsmittel entgegengeführt, das über die Leitung 3 herangeführt wird. Der von Sauergasen befreite Fluidstrom verlässt den Absorber A über die Leitung 2.

Ein Teil des am Sumpf des Absorbers A abgezogenen beladenen Absorptionsmittels wird über die Rückführleitung 5 in den Absorber A zurückgeführt. Der optionale Kühler 6 wird nicht verwendet. Die Rückführung in den Absorber kann an mehreren Stellen erfolgen, wie durch die optionalen Leitungen 5a, 5b angedeutet. Der andere Teil des beladenen Absorptionsmittels verlässt den Absorber A über die Leitung 4 und wird der Regeneration (nicht dargestellt) zugeführt.

Beispiele

Die nachstehend angegebenen Beispiele sind simulierte Ausführungsformen einer $CO_2$-Entfernung aus einem Fluidstrom. Die Beispiele wurden mit einer Simulationssoftware berechnet. Die Grundlagen dieser Simulationsmethode sind in N. Asprion, Nonequilibrium Rate-Based Simulation of Reactive Systems: Simulation Model, Heat Transfer, and Influence of Film Discretization, Ind. Eng. Chem. Res.; 2006; 45(6), S. 2054-2069, 2006 beschrieben.

Beispiel 1:

Dieses Beispiel beruht auf folgenden Annahmen:

45% aktivierte MDEA Lösung
Strom 1: $CO_2$-Gehatt 1.8 mol-%, Temperatur 30°C, Druck 45 bar (absolut)
Strom 3: Temperatur 50°C
Recyclezuführung auf 50% der Höhe

Die Phasengleichgewichte wurden für die aktivierte MDEA-Lösungen mit dem Pitzer-Modell (K.S. Pitzer, Activity Coefficients in Electrolyte Solutions 2nd ed., CRC-Press, 1991, Chapter 3, Ion Interaction Approach: Theory, die Parameter wurden an Phasengleichgewichtsmessungen im System $CO_2/H_2O/MDEA/Piperazin$ angepasst) berechnet.

In diesem Beispiel wurde die Menge an beladenem Absorptionsmittel variiert, die in den Absorber zurückgeführt wird. Die Ergebnisse sind in der nachstehenden Tabelle zusammengefasst (Die Bezeichnung der Ströme folgt den entsprechenden Bezugszeichen der Fig. 1).

| Strom 5 | Strom 2 | Strom 2 | Strom 4 | --- |
|---|---|---|---|---|
| Massenfluss*) | $CO_2$ Gehalt**) | Temperaturdifferenz**) (2) - (1) | Zusätzliche Wärme im Prozess**) | Gasvolumenstrom**) |
| [%] | [relativ] | [relativ] | [MW] | [relativ] |
| 0 | 1,00 | 1,00 | 0,0 | 1,00 |
| 10 | 0,97 | 0,93 | 0,3 | 0,99 |

(fortgesetzt)

| Strom 5 | Strom 2 | Strom 2 | Strom 4 | --- |
|---|---|---|---|---|
| Massenfluss*) | CO$_2$ Gehalt**) | Temperaturdifferenz**) (2) - (1) | Zusätzliche Wärme im Prozess**) | Gasvolumenstrom**) |
| [%] | [relativ] | [relativ] | [MW] | [relativ] |
| 25 | 0,87 | 0,85 | 0,7 | 0,99 |
| 50 | 0,65 | 0,72 | 1,3 | 0,98 |
| 100 | 0,38 | 0,55 | 2,1 | 0,97 |
| 150 | 0,28 | 0,47 | 2,4 | 0,96 |
| 200 | 0,24 | 0,42 | 2,7 | 0,95 |
| 300 | 0.20 | 0,36 | 2,9 | 0,95 |
| 400 | 0.18 | 0,33 | 2,9 | 0,95 |
| *) bezogen auf Strom 3 | | | | |
| **) relative Angabe, bezogen auf ein Verfahren ohne Rückführung | | | | |

Beispiel 2:

Dieses Beispiel beruht auf folgenden Annahmen:

45% aktivierte MDEA Lösung
Strom 1: CO$_2$-Gehalt 1.8 mol-%, Temperatur 30°C, Druck 45 bar (absolut)
Strom 3: Temperatur 50°C
100% Recycle

In diesem Beispiel wurde der Zugabeort für das rückgeführte beladene Absorptionsmittel variiert. Die Ergebnisse sind in der nachstehenden Tabelle zusammengefasst.

| Strom 5 | Strom 2 | Strom 2 | Strom 4 | --- |
|---|---|---|---|---|
| Höhe*) | CO$_2$ Gehalt**) | Temperaturdifferenz**) (2)-(1) | Zusätzliche Wärme im Prozess**) | Gasvolumenstrom**) |
| [%] | [relativ] | [relativ] | [MW] | [relativ] |
| 15 | 0,33 | 0,87 | 0,6 | 1,00 |
| 25 | 0,21 | 0,74 | 1,3 | 0,99 |
| 50 | 0,38 | 0,55 | 2,1 | 0,97 |
| 75 | 3,32 | 0,42 | 2,5 | 0,94 |
| 85 | 8,74 | 0,31 | 2,8 | 0,95 |
| *) bezogen auf Gesamthöhe des Absorbers | | | | |
| **) relative Angabe, bezogen auf ein Verfahren ohne Rückführung | | | | |

Die Beispiele 1 und 2 zeigen, dass mit der Erfindung folgende Vorteile erzielt werden können: es kann ein niedrigerer CO$_2$ Gehalt im gereinigten Gas erzielt werden. Alternativ kann man bei gleicher CO$_2$ Spezifikation den Absorber kürzer wählen oder weniger Absorptionsmittel verwenden. Die Temperatur des gereinigten Gases ist niedriger (kleinere Temperaturdifferenz (2) - (1)), dadurch wird eine geringere nachgeschaltete Gas-Kühlleistung benötigt. Dies ist insbesondere in LNG Anwendungen von Bedeutung, wobei das Gas nach der CO$_2$ Entfernung verflüssigt wird. Das beladene Absorptionsmittel fällt mit höherer Temperatur an, dadurch verbleibt mehr Wärme im Prozess. Bei der Regeneration muss entsprechend weniger Energie zugeführt werden, d.h. die E-nergieeffizienz des Prozesses steigt. Die Maximaltemperatur in der Kolonne ist niedriger, wodurch der effektive Gasvolumenstrom verringert wird. Dadurch lässt sich der Kolonnendurchmesser reduzieren.

**Beispiel 3: Rauchgaswäsche**

Dieses Beispiel beruht auf folgenden Annahmen:

30% MEA Lösung
Strom 1: $CO_2$-Gehalt 14.7 mol-%, Temperatur 40°C, Druck 1.1 bar (absolut)
Strom 3: Temperatur 40°C
Recyclezuführung auf 50% der Höhe

Die Phasengleichgewichte für die Rauchgaswäsche mit Monoethanolamin (MEA) wurden mit dem Elektolyt-NRTL-Modell (B. Mock, L.B. Evans, and C.-C. Chen, "Phase Equilibria in Multiple-Solvent Electrolyte Systems: A New Thermodynamic Model," Paper presented at the Boston Summer Computer Simulation Conference, July 1984.) berechnet. Die Parameter des Modells sind der folgenden Veröffentlichung entnommen: D.M. Austgen, G.T. Rochelle, X. Peng, and C.C. Chen, "A Model of Vapor-Liquid Equilibria in the Aqueous Acid Gas-Alkanolamine System Using the Electrolyte-NRTL Equation," Paper presented at the New Orleans AICHE Meeting, March 1988.

Die Ergebnisse sind in der nachstehenden Tabelle zusammengefasst.

| Strom 5 | Strom 2 | Strom 2 | Strom 4 | --- |
|---|---|---|---|---|
| Massenfluss*) | $CO_2$ Gehalt**) | Temperaturdifferenz**) (2)-(1) | Zusätzliche Wärme im Prozess**) | Aminverlust**) |
| [%] | [relativ] | [relativ] | [MW] | [relativ] |
| 0 | 1,00 | 1,00 | 0,0 | 1,00 |
| 10 | 0,99 | 0,94 | 0,2 | 0,94 |
| 25 | 0,97 | 0,86 | 0,4 | 0,87 |
| 50 | 0,96 | 0,72 | 0,8 | 0,74 |
| 100 | 0,96 | 0,46 | 1,4 | 0,52 |
| 150 | 0,96 | 0,20 | 1,9 | 0,32 |
| 175 | 0,99 | 0,06 | 2,1 | 0,22 |
| *) bezogen auf Strom 3 | | | | |
| **) relative Angabe, bezogen auf ein Verfahren ohne Rückführung | | | | |

**Patentansprüche**

1. Verfahren zum Entfernen saurer Gase aus einem Fluidstrom, bei dem man den Fluidstrom in den unteren Bereich eines Absorbers einführt und ein regeneriertes Absorptionsmittel, das eine wässrige Lösung wenigstens eines Amins umfasst und das mit dem Fluidstrom nicht vollständig mischbar ist, in den oberen Bereich des Absorbers einführt und dem Fluidstrom im Absorber entgegenführt, wobei man einen von Sauergasen befreiten Fluidstrom und ein mit Sauergasen beladenes Absorptionsmittel erhält, **dadurch gekennzeichnet, dass** man einen Teil des beladenen Absorptionsmittels an wenigstens einer zwischen dem oberen Bereich und dem unteren Bereich gelegenen Stelle in den Absorber zurückführt, ohne das zurückgeführte beladene Absorptionsmittel vor dem Einführen in den Absorber zu kühlen, und den anderen Teil des beladenen Absorptionsmittels durch Entspannen, Erwärmen und/oder Strippen regeneriert.

2. Verfahren nach Anspruch 1, bei dem das Verhältnis des Massenflusses des zurückgeführten beladenen Absorptionsmittels zum Massenfluss des regenerierten Absorptionsmittels 0,1 bis 3,0 beträgt.

3. Verfahren nach Anspruch 1 oder 2, bei dem die Höhendifferenz zwischen dem Zugabeort des zurückgeführten beladenen Absorptionsmittels und dem Einführort des Fluidstroms 20 bis 80 % der Höhendifferenz zwischen dem Zugabeort des regenerierten Absorptionsmittels und dem Einführort des Fluidstroms beträgt.

4. Verfahren nach einem der vorhergehenden Ansprüche, bei dem der Massenfluss des behandelten Fluidstroms m(1'), die spezifische Wärmekapazität des behandelten Fluidstroms Cp(1'), der Massenfluss des regenerierten Absorptionsmittels m(2) und die spezifische Wärmekapazität des regenerierten Absorptionsmittels Cp(2) der Glei-

chung genügen:

$$0{,}5 \cdot m(2) \cdot Cp(2) \le m(1') \cdot Cp(1') \le 2{,}0 \cdot m(2) \cdot Cp(2)$$

5. Verfahren nach einem der vorhergehenden Ansprüche, bei dem der zu behandelnde Fluidstrom eine Kohlendioxidkonzentration von 0,5 bis 5 mol-% aufweist.

6. Verfahren nach einem der vorhergehenden Ansprüche, bei dem das Absorptionsmittel eine wässrige Lösung von Monoethanolamin (MEA), Methylaminopropylamin (MAPA), Piperazin, Diethanolamin (DEA), Triethanolamin (TEA), Diethylethanolamin (DEEA), Diisopropylamin (DIPA), Aminoethoxyethanol (AEE), Dimethylaminopropanol (DIMAP) und Methyldiethanolamin (MDEA), Methyl-diisopropanolamin (MDIPA), 2-Amino-1-butanol (2-AB), 2-Amino-2-methyl-1-propanol (AMP), Kalium N,N-dimethylglycinat, Kalium-N-Methylalaninat, Kalium 2-Aminoethansulfonat oder Gemische davon umfasst.

7. Verfahren nach Anspruch 6, bei dem das Absorptionsmittel eine wässrige Lösung von Methyldiethanolamin und Piperazin umfasst.

8. Verfahren nach Anspruch 6, bei dem das Absorptionsmittel eine wässrige Lösung von Methyldiethanolamin und Methylaminopropyamin umfasst.

9. Verfahren nach Anspruch 6, bei dem das Absorptionsmittel eine wässrige Lösung von Methyldiethanolamin und Aminoethoxyethanol umfasst.

10. Verfahren nach Anspruch 6, bei dem das Absorptionsmittel eine wässrige Lösung von Methyldiethanolamin und 2-Amino-1-butanol umfasst.

11. Verfahren nach Anspruch 6, bei dem das Absorptionsmittel eine wässrige Lösung von Kalium N,N-dimethylglycinat umfasst.

12. Verfahren nach Anspruch 6, bei dem das Absorptionsmittel eine wässrige Lösung von Kalium-N-Methylalaninat umfasst.

**Claims**

1. A method for removing acid gases from a fluid stream, in which the fluid stream is introduced into the lower region of an absorber and a regenerated absorption medium that comprises an aqueous solution of at least one amine and is incompletely miscible with the fluid stream is introduced into the upper region of the absorber and passed in countercurrent flow to the fluid stream in the absorber, wherein a fluid stream feed from acid gases and an absorption medium loaded with acid gases are obtained, which comprises recirculating a part of the loaded absorption medium to the absorber at at least one point situated between the upper region and the lower region without cooling of the recirculated loaded absorption medium prior to the introduction into the absorber and regenerating the other part of the loaded absorption medium by expansion, heating and/or stripping.

2. The method according to claim 1 in which the ratio of the mass flow of the recirculated loaded absorption medium to the mass flow of the regenerated absorption medium is 0.1 to 3.0.

3. The method according to claim 1 or 2 in which the height difference between the feed site of the recirculated loaded absorption medium and the introduction site of the fluid stream is 20 to 80% of the height difference between the feed site of the regenerated absorption medium and the introduction site of the fluid stream.

4. The method according to one of the preceding claims, in which the mass flow of the treated fluid stream m(1'), the specific heat capacity of the treated fluid stream Cp(1'), the mass flow of the regenerated absorption medium m(2) and the specific heat capacity of the regenerated absorption medium Cp(2) satisfy the equation:

$$0.5 \cdot m(2) \cdot Cp(2) \leq m(1') \cdot Cp(1') \leq 2.0 \cdot m(2) \cdot Cp(2)$$

5. The method according to one of the preceding claims, in which the fluid stream to be treated has a carbon dioxide concentration of 0.5 to 5 mol%.

6. The method according to one of the preceding claims, in which the absorption medium comprises an aqueous solution of monoethanolamine (MEA), methylaminopropylamine (MAPA), piperazine, diethanolamine (DEA), triethanolamine (TEA), diethylethanolamine (DEEA), diisopropylamine (DIPA), aminoethoxyethanol (AEE), dimethylaminopropanol (DIMAP) and methyldiethanolamine (MDEA), methyldiisopropanolamine (MDIPA), 2-amino-1-butanol (2-AB), 2-amino-2-methyl-1-propanol (AMP), potassium N,N-dimethylglycinate, potassium N-methylalaninate, potassium 2-aminoethanesulfonate, or mixtures thereof.

7. The method according to claim 6, in which the absorption medium comprises an aqueous solution of methyldiethanolamine and piperazine.

8. The method according to claim 6, in which the absorption medium comprises an aqueous solution of methyldiethanolamine and methylaminopropylamine.

9. The method according to claim 6, in which the absorption medium comprises an aqueous solution of methyldiethanolamine and aminoethoxyethanol.

10. The method according to claim 6, in which the absorption medium comprises an aqueous solution of methyldiethanolamine and 2-amino-1-butanol.

11. The method according to claim 6, in which the absorption medium comprises an aqueous solution of potassium N,N-dimethylglycinate.

12. The method according to claim 6, in which the absorption medium comprises an aqueous solution of potassium N-methylalaninate.


**Revendications**

1. Procédé d'élimination de gaz acides d'un courant fluide, selon lequel le courant fluide est introduit dans la zone inférieure d'un absorbeur, et un agent d'absorption régénéré, qui comprend une solution aqueuse d'au moins une amine et qui n'est pas complètement miscible avec le courant fluide, est introduit dans la zone supérieure de l'absorbeur et mis en circulation à contre-courant du courant fluide dans l'absorbeur, un courant fluide débarrassé des gaz acides et un agent d'absorption chargé avec les gaz acides étant obtenus, **caractérisé en ce qu'**une partie de l'agent d'absorption chargé est recyclée à au moins un emplacement situé entre la zone supérieure et la zone inférieure dans l'absorbeur sans que l'agent d'absorption chargé recyclé soit refroidi avant l'introduction dans l'absorbeur, et l'autre partie de l'agent d'absorption chargé est régénérée par détente, chauffage et/ou extraction.

2. Procédé selon la revendication 1, selon lequel le rapport entre le débit massique de l'agent d'absorption chargé recyclé et le débit massique de l'agent d'absorption régénéré est de 0,1 à 3,0.

3. Procédé selon la revendication 1 ou 2, selon lequel la différence de hauteur entre l'emplacement d'introduction de l'agent d'absorption chargé recyclé et l'emplacement d'introduction du courant fluide est de 20 à 80 % de la différence de hauteur entre l'emplacement d'introduction de l'agent d'absorption régénéré et l'emplacement d'introduction du courant fluide.

4. Procédé selon l'une quelconque des revendications précédentes, selon lequel le débit massique du courant fluide traité m(1'), la capacité calorifique spécifique du courant fluide traité Cp(1'), le débit massique de l'agent d'absorption régénéré m(2) et la capacité calorifique spécifique de l'agent d'absorption régénéré Cp(2) satisfont l'équation suivante :

$$0,5 \cdot m(2) \cdot Cp(2) \leq m(1') \cdot Cp(1') \leq 2,0 \cdot m(2) \cdot Cp(2)$$

5. Procédé selon l'une quelconque des revendications précédentes, selon lequel le courant fluide à traiter présente une concentration en dioxyde de carbone de 0,5 à 5 % en moles.

6. Procédé selon l'une quelconque des revendications précédentes, selon lequel l'agent d'absorption comprend une solution aqueuse de monoéthanolamine (MEA), de méthylaminopropylamine (MAPA), de pipérazine, de diéthanolamine (DEA), de triéthanolamine (TEA), de diéthyléthanolamine (DEEA), de diisopropylamine (DIPA), d'aminoéthoxyéthanol (AEE), de diméthylaminopropanol (DIMAP) et de méthyldiéthanolamine (MDEA), de méthyldiisopropanolamine (MDIPA), de 2-amino-1-butanol (2-AB), de 2-amino-2-méthyl-1-propanol (AMP), de N,N-diméthylglycinate de potassium, de N-méthylalaninate de potassium, de 2-aminoéthanesulfonate de potassium ou leurs mélanges.

7. Procédé selon la revendication 6, selon lequel l'agent d'absorption comprend une solution aqueuse de méthyldiéthanolamine et de pipérazine.

8. Procédé selon la revendication 6, selon lequel l'agent d'absorption comprend une solution aqueuse de méthyldiéthanolamine et de méthylaminopropylamine.

9. Procédé selon la revendication 6, selon lequel l'agent d'absorption comprend une solution aqueuse de méthyldiéthanolamine et d'aminoéthoxyéthanol.

10. Procédé selon la revendication 6, selon lequel l'agent d'absorption comprend une solution aqueuse de méthyldiéthanolamine et de 2-amino-1-butanol.

11. Procédé selon la revendication 6, selon lequel l'agent d'absorption comprend une solution aqueuse de N,N-diméthylglycinate de potassium.

12. Procédé selon la revendication 6, selon lequel l'agent d'absorption comprend une solution aqueuse de N-méthylalaninate de potassium.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004073838 A
- WO 2004080573 A
- EP 0588175 A
- US 4336233 A

**In der Beschreibung aufgeführte Nicht-Patentliteratur**

- **N. ASPRION.** Nonequilibrium Rate-Based Simulation of Reactive Systems: Simulation Model, Heat Transfer, and Influence of Film Discretization. *Ind. Eng. Chem. Res.,* 2006, vol. 45 (6), 2054-2069
- **K.S. PITZER.** Activity Coefficients in Electrolyte Solutions. CRC-Press, 1991
- **B. MOCK ; L.B. EVANS ; C.-C. CHEN.** Phase Equilibria in Multiple-Solvent Electrolyte Systems: A New Thermodynamic Model. *Paper presented at the Boston Summer Computer Simulation Conference,* Juli 1984
- **D.M. AUSTGEN ; G.T. ROCHELLE ; X. PENG ; C.C. CHEN.** A Model of Vapor-Liquid Equilibria in the Aqueous Acid Gas-Alkanolamine System Using the Electrolyte-NRTL Equation. *Paper presented at the New Orleans AICHE Meeting,* Marz 1988